**Europäisches Patentamt**

**European Patent Office**

**Office européen des brevets**

(11) Publication number: **0 114 790**
**B1**

(12) **EUROPEAN PATENT SPECIFICATION**

(45) Date of publication of patent specification: **13.12.89**

(51) Int. Cl.⁴: **B 60 G 21/04**

(21) Application number: **84830005.9**

(22) Date of filing: **09.01.84**

(54) **Rear suspension for motor vehicles.**

(30) Priority: **14.01.83 IT 6703083**

(43) Date of publication of application:
**01.08.84 Bulletin 84/31**

(45) Publication of the grant of the patent:
**13.12.89 Bulletin 89/50**

(84) Designated Contracting States:
**DE FR GB NL SE**

(56) References cited:
**DE-A-2 700 369**
**FR-A-1 591 438**
**FR-A-2 023 635**

**AUTOMOTIVE ENGINEER, vol. 7, no. 5, October-November 1982, pages 32-36, Southend-on-Sea, GB; B. MACLAURIN: "Semi-independent suspensions"**

**AUTOMOTIVE ENGINEER, vol. 7, no. 3, June-July 1982, page 16, Southend-on-Sea, GB; "Vehicle perspective"**

(73) Proprietor: **FIAT AUTO S.p.A.**
**Corso Giovanni Agnelli 200**
**I-10135 Torino (IT)**

(72) Inventor: **Egidi, Corrado**
**Corso Montecucco 84/D**
**I-10141 Torino (IT)**

(74) Representative: **Notaro, Giancarlo**
**c/o Jacobacci-Casetta & Perani S.p.A. Via Alfieri, 17**
**I-10121 Torino (IT)**

Courier Press, Leamington Spa, England.

## Description

The present invention relates to motor vehicle suspensions. More particularly, the invention concerns a rear suspension for motor vehicles of the known type including a pair of swinging arms connected to the motor vehicle body for oscillation about a substantially transverse axis and each carrying a respective rear wheel of the motor vehicle.

Rear suspensions of this type have been known for some time, in which relative rotation of the arms about a transverse axis is allowed. These suspensions may be classified into essentially two different categories:

a) so-called "torsion bar" suspensions in which the two swinging arms are connected by a cross member which allows relative rotation of the swinging arms by virtue of its capacity to deform resiliently under torsion;

b) so-called "trailing arm" suspensions in which the relative rotation of the arms occur about a transverse axis coincident with the pivot axis of the axle relative to the body or with the common axis of the two wheels.

Known suspensions of the type described above have various disadvantages.

In the case of torsion bar suspensions, the torsional stresses in the cross member in the event of non-symmetrical vertical movements of the suspension are variable in strength and frequency and may thus be a cause of fatigue failure, with a consequent lessening of the reliability of the suspension.

In suspensions of the second type, the median planes of the wheels remain parallel to each other and to the longitudinal plane of the motor vehicle in the case of asymmetrical movements of the wheels; in other words, the inclination of the median plane of each wheel to the ground coincides with the roll angle of the motor vehicle body and reduces the ability of the tyre to grip in a curve.

The present invention relates in particular to a motor-vehicle suspension of the type indicated in the attached Claim 1. A suspension of this type is illustrated in the publication "Automotive Engineer", vol. 7 (1982), (No. 5), pages 32—36, and has two coaxial cylindrical tubular cross elements rotatably mounted within each other.

A suspension of this type can allow relative rotation of the two arms about their transverse oscillation axis and, at the same time, presents a high rigidity in the horizontal plane and the vertical plane so as easily to bear vertical loads on the suspension and lateral loads in curves, as in the case of a rigid axle suspension.

Furthermore, in the suspension of the above indicated type, the inclination of the median plane of the wheel to the body of the vehicle during vertical movements of the suspension varies according to a predetermined law which can be defined exactly during design in dependence on the requirements for the behaviour of the vehicle on the road. These laws of variation depend, in fact, on the positioning of the axis of relative oscillation of the two cross member elements in both a vertical sense and a longitudinal sense relative to the oscillation axis of the arms and relative to the axis of the wheels. More particularly, a variation in the angle of the axis of each wheel to the transverse direction in a horizontal plane (the steering angle) is a function of the height of the axis of mutual oscillation of the two cross member elements, while the variation in the angle of the axis of each wheel to the vertical in a vertical transverse plane (the camber) is a function of the longitudinal position of the axis of mutual oscillation of the two cross member elements, these two functions being independent of each other.

In the present description and the following claims, the term "transverse" relates to a direction perpendicular to the vertical longitudinal plane of the motor vehicle.

A suspension of the above indicated type also has the advantage of allowing a variation of the median plane of the wheels relative to the longitudinal vertical plane while the wheels are kept parallel to each other, wherein it differs from torsion bar suspensions which allow this variation but are not able to keep the wheels parallel to each other because the relative rotation of the two swinging arms occurs with resilient deformation of the connecting cross member.

The object of the present invention is to provide a suspension of the above indicated type which can be manufactured and assembled easily and economically.

According to the invention, this object is achieved by a rear suspension as defined in the preamble and the characterizing portion of the attached Claim 1.

Further characteristics and advantages of the present invention will become apparent from the description which follows with reference to the appended drawings, provided purely by way of non-limiting example, in which:

Figure 1 shows, in plan, the geometry of one embodiment of the suspension according to the present invention,

Figure 2 shows the geometry of the suspension of Figure 1 in side elevation,

Figure 3 is a variant of Figure 2,

Figure 4 shows, in plan, the geometry of a further embodiment of the suspension according to the invention,

Figure 5 shows the geometry of the suspension of Figure 4 in side elevation.

Figure 6 is a variant of Figure 5,

Figure 7 is a plan view of a further embodiment of the present invention,

Figure 8 is a sectional view taken on line XI of Figure 7, on an enlarged scale,

Figure 9 illustrates a variant of Figure 7,

Figure 10 illustrates the detail X of Figure 9 on an enlarged scale, and

Figures 11 and 12 are sections taken on the lines XI and XII of Figure 10.

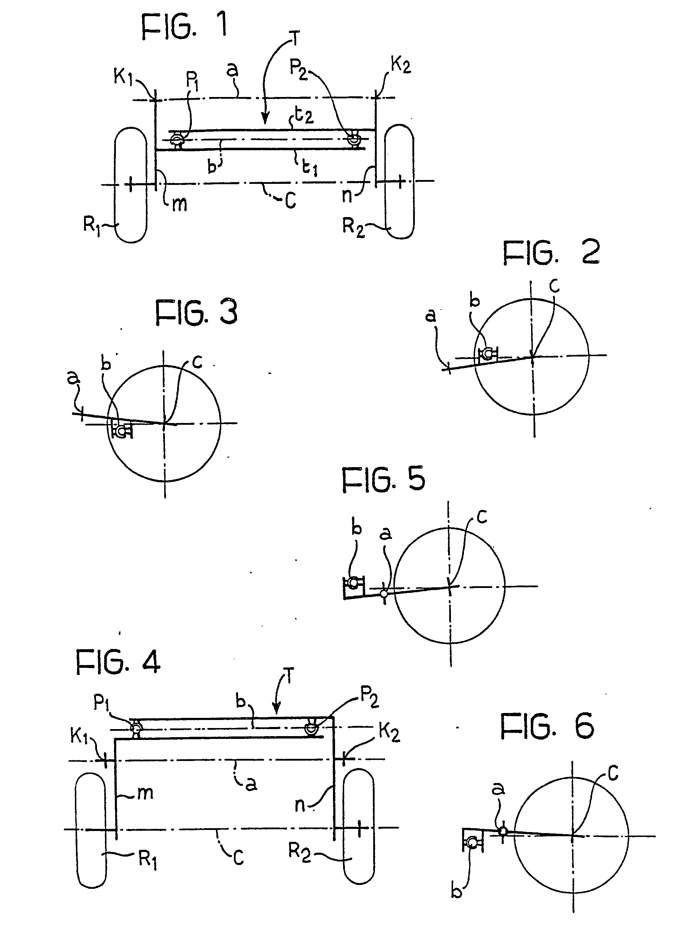

The diagrammatic illustrations of Figures 1 to 6 relate to rear suspensions for motor vehicles each including two arms *m, n* carrying the rear wheels $R_1$, $R_2$ of the motor vehicle and connected at $K_1$, $K_2$ to the motor vehicle body (not illustrated) so as to be able to oscillate about a transverse axis *a*.

The two swinging arms *m, n* are connected together by a cross member T which includes two cross member elements $t_1$, $t_2$ connected to respective swinging arms *m, n* and joined together so as to be free to oscillate relative to each other about a transverse axis *b*. The diagrammatic illustrations of Figures 1 to 6 relate to one embodiment of the invention, in which the two cross member elements $t_1$, $t_2$ are side by side and connected by means of two universal joints $P_1$, $P_2$, the mutual oscillation axis b being defined by the straight line passing through the joints. As is clear from the drawings, the mutual oscillation axis *b* of the two cross member elements $t_1$, $t_2$ is spaced both longitudinally and vertically from the transverse oscillation axis *a* of the two arms *m, n* and from the axis of the wheels, indicated *c*.

In the case of Figure 1, the axis *b* is between the axes *a, c* and is substantially equi-distant from these axes in the horizontal plane. In the vertical longitudinal plane, the axis *b* may be located above the axes *a, c* (see Figure 2) or beneath them (see Figure 3). Figure 4 relates to the case in which the oscillation axis *b* is located in front of the oscillation axis *a* of the suspension (with reference to the direction of advance of the motor vehicle). In other words, in this case, the oscillation axis *a* is between the axes *b, c* in the horizontal plane. In this case also, the position of the axis *b* in the longitudinal vertical plane may be above (see Figure 5) or below (see Figure 6) the position of the axes *a, c*.

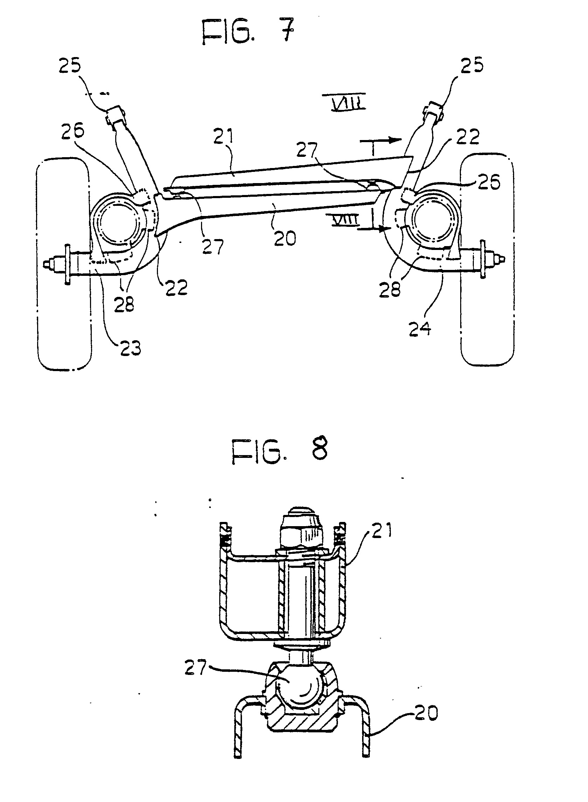

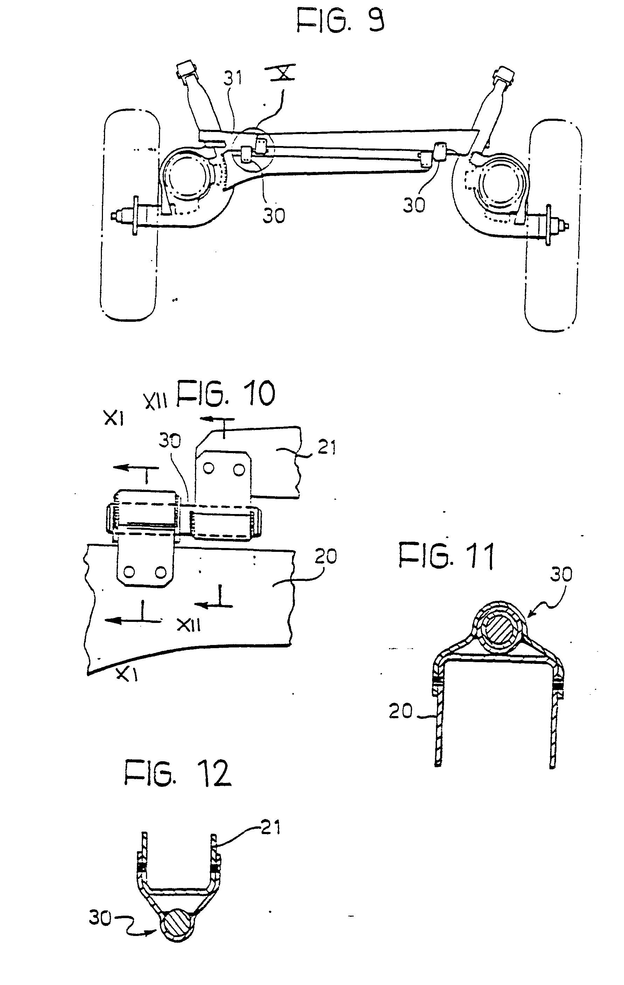

The embodiment illustrated in Figure 7 relates to the case in which the cross member elements (indicated 20, 21) are adjacent each other and are made from pressed sheet metal. As shown in Figure 11, the two sheet metal elements 20, 21 each have a channel section. It is clear, however, that other sections could be used and that an auxiliary element could be provided for joining with each channel-sectioned element to form a box structure whenever this is necessitated by structural requirements.

The two cross member elements 20, 21 are connected by welding 22 to respective tubular swining arms 23, 24 each of which carries a welded sleeve 25 at its front end for housing a bush for anchoring the suspension to the body. The two wheel spindles are fixed to the rear ends of the arms 23, 24 by rotary arc welding. A bracket 26 connected to the swinging arm by welding 28 provides an abutment for a helical spring and a reaction surface for a suspension rebound buffer (not illustrated).

The two cross member elements 20, 21 are connected together by two universal joints 23 (see also Figure 8).

Figures 9 and 10 illustrate a variant of Figure 7, in which the two cross member elements 20, 21 are connected by hinges 30. In this case, a stabilizer bar 31 is provided for locking the two cross member elements axially and for reacting against lateral loads acting on the suspension.

Figures 11 and 12 illustrate the structure of each hinge 30 in detail.

## Claims

1. Rear suspension for motor vehicles, including a pair of swinging arms (m, n) connected to the motor vehicle body for oscillation about a substantially transverse axis (a) and each carrying a respective rear wheel ($R_1$, $R_2$) of the motor vehicle, and a cross member (T) which connects the two arms (m, n) and includes two cross member elements ($t_1$, $t_2$) connected to respective arms (m, n) and joined together so as to be free to oscillate relative to each other about a transverse axis (b) spaced both longitudinally and vertically from the oscillation axis (a) of the arms (m, n) and the axis (c) of the wheels ($R_1$, $R_2$), characterised in that the cross member elements ($t_1$, $t_2$) are located side by side and are joined by means of two pivotal joints (27; 30).

2. Rear suspension for motor vehicles according to Claim 1, characterised in that the two cross member elements (20, 21) are made from pressed sheet metal.

3. Rear suspension for motor vehicles according to Claim 2, characterised in that the cross member elements (20, 21) are disposed adjacent each other and are joined together by means of two hinges (30) and a stabilizer bar (31) adapted to withstand lateral loads on the suspension.

4. Rear suspension for a motor vehicle according to any one of the preceding claims, characterised in that the spindle of each rear wheel is connected to the respective swinging arm (23, 24) by means of rotary arc welding.

5. Rear suspension for a motor vehicle according to Claim 1, characterised in that the two cross member elements (20, 21) are connected to each other by means of universal joints (27).

## Patentansprüche

1. Hintere Kraftfahrzeugaüfhängung
mit einem Paar von Schwingarmen (m, n), die mit der Kraftfahrzeugkarosserie so verbunden sind, daß sie um eine im wesentlichen transversale Achse (a) schwingen können, und die jeweils ein Hinterrad ($R_1$, $R_2$) des Kraftfahrzeugs tragen,
sowie mit einem die beiden Schwingarme (m, n) miteinander verbindenden Querglied (T), das zwei Quergliedelemente ($t_1$, $t_2$), umfaßt, die mit den betreffenden Schwingarmen (m, n) verbunden und so miteinander gekuppelt sind, daß sie relativ zueinander um eine Querachse (b) frei schwingen können, die in Längsrichtung und in vertikaler Richtung Abstand von der Schwingachse (a) der beiden Schwingarme (m, n) und der Achse (C) der Räder ($R_1$, $R_2$) hat, dadurch gekennzeichnet, daß die Quergliedelemente ($t_1$, $t_2$) Seite an Seite angeordnet und durch Drehgelenkkupplungen (27; 30) miteinander verbunden sind.

2. Hintere Kraftfahrzeugaufhängung nach Anspruch 1, dadurch gekennzeichnet, daß die beiden Quergliedelemente (20, 21) als Metallblech-Preßteile ausgebildet sind.

3. Hintere Kraftfahrzeugaufhängung nach Anspruch 2, dadurch gekennzeichnet, daß die Quergliedelemente (20, 21) nebeneinander angeordnet und durch zwei Scharniergelenke (30) und einen Stabilisatorstab (31) miteinander verbunden sind, der seitlich auf die Aufhängung einwirkenden Kräften Widerstand entgegensetzen kann.

4. Hintere Kraftfahrzeugaufhängung nach einem der vorhergehenden Ansprüche, dadurch gekennzeichnet, daß die Achsschenkel der Hinterräder mit dem zugeordneten Schwingarm (23, 24) durch rotierendes Lichtbogenschweißen verbunden sind.

5. Hintere Kraftfahrzeugaufhängung nach Anspruch 1, dadurch gekennzeichnet, daß die beiden Quergliedelemente (20, 21) durch Kugelgelenke (27) miteinander verbunden sind.

**Revendications**

1. Suspension arrière pour véhicule à moteur, comprenant deux bras oscillants (m, n) raccordés à la carrosserie du véhicule à moteur afin qu'ils oscillent autour d'un axe sensiblement transversal (a), chacun portant une roue arrière respective ($R_1$, $R_2$) du véhicule à moteur, et un organe transversal (T) qui raccorde les deux bras (m, n) et comprend deux éléments ($t_1$, $t_2$) de traverse connectés aux bras respectifs (m, n) et raccordés l'un à l'autre afin qu'ils puissent osciller librement l'un par rapport à l'autre autour d'un axe transversal (b) distant à la fois longitudinalement et verticalement de l'axe d'oscillation (a) des bras (m, n) et de l'axe (C) des roues ($R_1$, $R_2$), caractérisée en ce que les éléments ($t_1$, $t_2$) de traverse sont placés côte à côte et sont raccordés par deux joints pivotants (27, 30).

2. Suspension arrière pour véhicule à moteur selon la revendication 1, caracatérisée en ce que les deux éléments (20, 21) de traverse sont formés d'une feuille métallique emboutie.

3. Suspension arrière pour véhicule à moteur selon la revendication 2, caractérisée en ce que les éléments (20, 21) de traverse sont disposés l'un près de l'autre et sont raccordés par deux articulations (30) et une barre (31) stabilisatrice destinée à encaisser les forces latérales appliquées à la suspension.

4. Suspension arrière pour véhicule à moteur selon l'une quelconque des revendications précédentes, caractérisée en ce que la fusée de chaque roue arrière est raccordée aux bras oscillants respectifs (23, 24) par soudage rotatif à l'arc.

5. Suspension arrière pour véhicule à moteur selon la revendication 1, caractérisée en ce que les deux éléments (20, 21) de traverse sont raccordés l'un à l'autre par des joints universels (27).

FIG. 1

FIG. 2

FIG. 3

FIG. 5

FIG. 4

FIG. 6

# FIG. 7

# FIG. 8

2

FIG. 9

FIG. 10

FIG. 11

FIG. 12